# EUROPÄISCHE PATENTSCHRIFT

(11) **EP 1 385 931 B1**
(45) Veröffentlichungstag und Bekanntmachung des Hinweises auf die Patenterteilung: **04.07.2007**
(21) Anmeldenummer: 02712929.5
(22) Anmeldetag: 27.02.2002
(51) Int. Cl.: C12C 7/28, C12C 13/00, B01J 2/00

(54) **EINSATZ DER WIRBELSCHICHTTECHNIK IM BRAUWESEN**
APPLICATION OF FLUID BED TECHNOLOGY IN BREWING
APPLICATION DU LIT FLUIDISE EN BRASSERIE

(30) Priorität: 01.05.2001 DE 10120979; 02.07.2001 DE 10131962
(43) Veröffentlichungstag der Anmeldung: 04.02.2004
(73) Patentinhaber: Kamil, Gerhard, 85232 Bergkirchen (DE)
(72) Erfinder: KAMIL, Gerhard, 85232 Bergkirschen (DE)
(74) Vertreter: Rapp, Bertram
(86) Internationale Anmeldenummer: PCT/EP2002/002110
(87) Internationale Veröffentlichungsnummer: WO 2002/088294

(56) Entgegenhaltungen:
- EP-A- 0 011 324
- EP-A- 0 307 052
- DE-A- 1 918 765
- DE-A- 2 022 627
- DE-A- 2 508 718
- DATABASE FSTA [Online] INTERNATIONAL FOOD INFORMATION SERVICE (IFIS), FRANFURT/MAIN, DE; ANCHEKOV YU N ET AL: "Promising method for preservation of brewers wort." Database accession no. 80-1-03-h0310 XP002200738 & IZVESTIYA VYSSHIKH UCHEBNYKH ZAVEDENII, PISHCHEVAYA TEKHNOLOGIYA 1979 VORONEZHSKII TEKH. INST., VORONEZH, USSR,
- BELITZ, H.-D.; GROSCH W.: "Lehrbuch der Lebensmittelchemi" 1992 , SPRINGER VERLAG , BERLIN XP002200856 Seite 477, Spalte 2, Absatz 2 Seite 478, Spalte 1, Absatz 2

## Beschreibung

Die vorliegende Erfindung betrifft Verfahren zur Herstellung von Getränken, insbesondere von gebrauten und/oder gegärten Getränken, sowie Vorrichtungen und Anlagen zur Ausführung dieser Verfahren.

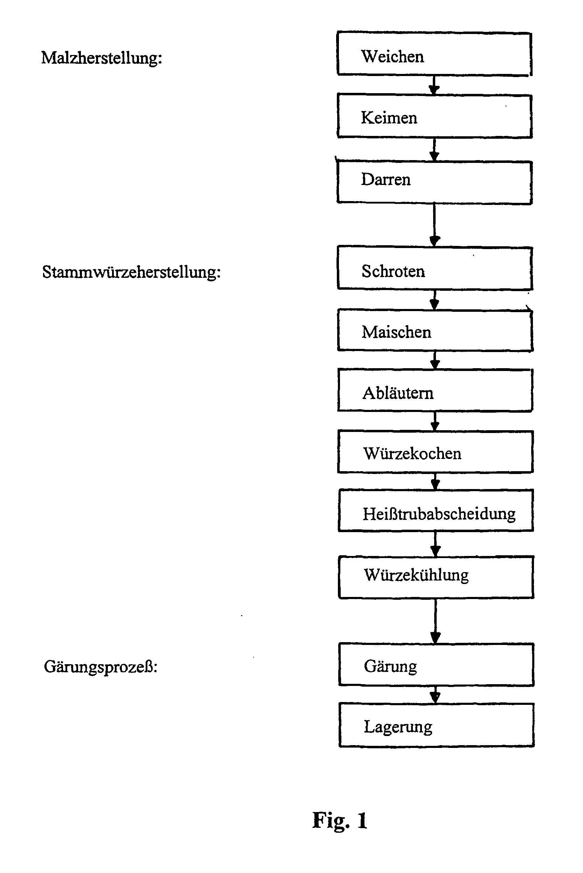

Das Verfahren der Bierherstellung kann im Wesentlichen in drei Hauptprozesse unterteilt werden, nämlich die Malzherstellung, die Würzeherstellung und den Gärungsprozess. Dieses Verfahren und die hierbei verwendeten Apparate und Vorrichtungen sind Gegenstand des Studiums des Brauwesens und dem Fachmann bekannt. Hierzu wird auf untern folgende Beschreibung der Figur 1 und auf die einschlägige Fachliteratur verwiesen, insbesondere auf den Artikel ,,125 Jahre Steinecker-Sudhaustechnologie" von H. Miedaner ("Brauwelt", 2000, Seiten 799 bis 805).

Die DE 1918765 A beschreibt ein Verfahren zur Herstellung von Bier und von Ausgangsmaterial zum Brauen, wobei eine wässerige Stammwürze hergestellt und diese Lösung beispielsweise in einem Dünnschichtverdampfer eingetrocknet wird.

Ausgehend hiervon besteht die Aufgabe, die Qualität des gebrauten Endproduktes, insbesondere Biers, welches durch Rücklösung von Stammwürzegranulat und anschließende Vergärung hergestellt wurde, weiter deutlich zu erhöhen, wobei gleichzeitig die Herstellung selbst vereinfacht, das Handling für den Transport erleichtert sowie die Haltbarkeit, Lagerfähigkeit und Wiederauflösbarkeit verbessert werden sollen.

Gelöst wird diese Aufgabe durch ein Verfahren gemäß Anspruch 1 bzw. durch eine Vorrichtung gemäß Anspruch 11. Vorteilhafte Ausgestaltungen sind den jeweiligen Unteransprüchen entnehmbar.

Der Erfindung liegt der grundlegende Gedanke zugrunde, die zur Bierherstellung notwendige Stammwürze zunächst zu trocknen und anschließend für die weitere Verarbeitung, insbesondere dem Gärprozess, wieder aufzulösen. Mit Stammwürze wird dabei in der vorliegenden Erfindung Bierwürze im brautechnischen Sinne verstanden, die also in flüssiger Form vorliegt. Zudem wird in der vorliegenden Erfindung auch von Stammwürze gesprochen, wenn ein anderes Ausgangsprodukt als üblicherweise vermälzte Getreidesorten wie z. B. Gerste, Weizen, Roggen, Dinkel, oder Emmer verwendet wird, insbesondere sonstige stärkehaltige Grundstoffe wie Mais, Reis, und/oder vermälzte Getreidesorten und/oder sonstige unvermälzte Getreidesorten sowie Zucker. Jedenfalls aber muss Stammwürze in flüssiger Form vorliegen.

Die Trocknung und anschließende Auflösung von Stammwürze erscheint zunächst aufwendiger als die herkömmliche Bierherstellung. Diese Vorgehensweise bietet jedoch bei der Herstellung von großen Mengen an Bier erhebliche Vorteile:

Bei der herkömmlichen Vorgehensweise wird in jeder Brauerei der gesamte technologische Prozeß der Stammwürzeherstellung durchgeführt, um diese anschlie-ßend zu Bier zu verarbeiten. Bei Bierherstellern erfordert dies eine dezentrale Stammwürzeherstellung in einer Vielzahl von Sudhäusern in den jeweiligen Bestimmungsländern, d.h. bisher hat jede Brauerei ein Sudhaus. Dabei wird die gesamte Stammwürze- und Bierherstellung auf einem Betriebsgelände durchgeführt. Das technologische Know-How der Bierherstellung insgesamt liegt jedoch in der Stammwürzeherstellung. Der Gärprozeß erfordert keine besonderen Fachkenntnisse.

Nach der vorliegenden Erfindung kann die Stammwürzeherstellung zentral erfolgen, wobei das Endprodukt getrocknete Stammwürze ist, die gelagert und leicht transportiert werden kann. Die getrocknete Stammwürze kann nach einem Transport zu einer Gäranlage zunächst in Wasser aufgelöst, und unter Zugabe von Hefe zu Bier vergoren werden. Das hat zunächst den Vorteil, dass eine Vielzahl von Sudhäusern überflüssig wird, die mit erheblichen Kosten verbunden sind. Eine zentrale Herstellung von getrockneter Stammwürze erniedrigt also den apparatetechnischen und den energetischen Aufwand erheblich, da eine zentrale Herstellung entsprechende Synergie-Effekte mit sich bringt. Das Vorhandensein von brautechnischem Know-How an den dezentralen Gäranlagen ist nicht mehr in entscheidendem Maße notwendig. Außerdem wird eine Vereinheitlichung der Qualität der Bierherstellung erreicht, trotz Durchführung der endgültigen Bierherstellung an verschiedenen Orten.

Nach der vorliegenden Erfindung eignet sich für die Herstellung von getrockneter Stammwürze insbesondere der Einsatz der Wirbelschichttechnik, also Wirbelschichttrocknen, Wirbelschichtgranulieren, Wirbelschichtsprühgranulieren und/oder Wirbelbeschichten. Die besonderen Vorteile dieser Verfahren ist eine besondere Eignung für die Herstellung von Granulaten. Die Granulate können dabei mit einer oder mehreren weiteren Schichten überzogen werden, insbesondere also mit weiteren Aromastoffen. Vor allem aber können die in der getrockneten Stammwürze enthaltenen Aromastoffe eingekapselt werden, so dass sich diese bei einer Lagerung und bei einem eventuellen Transport nicht verflüchtigen.
- Figur 1: zeigt ein Ablaufdiagramm eines herkömmlichen Bierherstellungsprozesses,
- Figur 2: zeigt ein Ablaufdiagramm der Herstellung von Stammwürzegranulat nach der vorliegenden Erfindung, und
- Figur 3: zeigt ein Ablaufdiagramm der Herstellung von Bier, ausgehend von Stammwürzegranulat, nach der vorliegenden Erfindung.

Anhand der Figur 1 wird zum besseren Verständnis der Erfindung zunächst die im Brauwesen eingesetzten Verfahrensschritte und die hierfür üblicherweise verwendeten Anlagen kurz umrissen. Das Verfahren der Bierherstellung kann im wesentlichen in drei Hauptprozesse unterteilt werden, nämlich der Malzherstellung, der Würzeherstellung und dem Gärungsprozess.

Bei der Malzherstellung wird das rohe Gerstenkorn zu Malz verarbeitet, wobei hierzu in der Mälzerei die Verfahrensschritte Weichen, Keimen und Darren eingesetzt werden. Während des Weichens muß das Korn Wasser aufnehmen, mit Sauerstoff versorgt und gereinigt werden. Danach erfolgt die Keimung in Keimkastenanlagen, wobei üblicherweise Ventilatoren eine Luftversorgung gewährleisten, und Wendeeinrichtungen für eine gleichmäßige Umschichtung des Keimgutes sorgen. Der Zweck des Mälzens ist hauptsächlich die Gewinnung von Enzymen und deren steuerbare Reaktionen auf die Malzinhaltsstoffe. Während der Wachstumsvorgänge veranlasst nämlich der Keimling die Bildung von Enzymen, die in der Lage sind, die Korninhaltsstoffe zu zersetzen bzw. zu zerlegen. Dieser Prozeß betrifft vor allem den Eiweiß- und Stärkeabbau sowie den Abbau sonstiger Inhaltsstoffe. Nach der für die Stoffumwandlungen benötigten Keimzeit wird der Keimprozeß_durch den Entzug von Wasser abgebrochen. Diesen Vorgang bezeichnet der Fachmann als Darren. Der Wasserentzug wird üblicherweise durch Einsatz von Wärme bzw. Hitze und Luftdurchsatz erreicht. Durch das Darren wird dem Malz je nach Typ ein charakteristisches Aroma und eine charakteristische Farbe verliehen, die sich auf den späteren Biertyp auswirken. Nach dem Darren hat das Malz üblicherweise einen Wassergehalt von unter 5 %, wodurch es lagerfähig ist. Am Ende der Malzherstellung liegt das Malz weiterhin in Form eines Kornes vor. Außer der Gerste, die als Rohstoff für die Malzbereitung für untergärige Biere Verwendung findet, werden noch andere Getreidesorten, wie z. B. Weizen, Roggen, Dinkel und Emmer vermälzt.

Bei der Würzeherstellung wird üblicherweise das Malz unter Zugabe von Wasser und Hopfen zur sogenannten Stammwürze verarbeitet. Dabei kann - je nach gewünschtem Getränk - noch verschiedene Zuckerarten sowie sonstige stärkehaltige Grundstoffe, wie Mais, Reis, sonstige_vermälzte Getreidesorten und/oder sonstige unvermälzte Getreidesorten verarbeitet werden. Auch der Zusatz von Enzympräparaten und von anorganischen Substanzen ist möglich. Die Stammwürzeherstellung erfolgt im sogenannten Sudhaus, womit die Gesamtheit der zur Herstellung der Stammwürze erforderlichen Anlagen und/oder Vorrichtungen gemeint ist. Die Würzeherstellung im Sudhaus, also der Sudhausprozeß, besteht aus üblicherweise aus sechs Teilprozessen, nämlich dem Schroten, dem Maischen, dem Abläutem, dem Würzekochen, der Heißtrubabscheidung und der Würzekühlung.

Um die in der Mälzerei begonnenen, enzymatischen Abbauvorgänge im Malzkorn weiterführen zu können, muß das Malz gezielt zerkleinert werden. Dieser Vorgang des Schrotens erfolgt üblicherweise in einer Schrotmühle, die die Aufgabe hat, die Kornumhüllung, den sogenannten Spelz, vom restlichen Korn zu trennen. Dabei muß der Spelz möglichst schonend behandelt werden für die spätere Verwendung, die unten näher erläutert wird. Beim Schroten soll der stärkehaltige Mehlkörper weitestgehend zerkleinert werden.

Das anschließende Maischen erfolgt üblicherweise in einem Maischbottich und einer Maischpfanne. Unter Maischen versteht man das Lösen der Malzinhaltsstoffe, vor allem der Stärke und der Eiweißstoffe, und den Abbau hochmolekularer organischer Substanzen in eine wasserlösliche Form durch die malzeigenen Enzyme. Als wichtigster Vorgang beim Maischen wird hierbei die unlösliche Stärke zu vergärbaren Zuckern abgebaut. Das Maischen spielt für die Würzebereitung eine zentrale Rolle, da bei diesem Prozeß die Grundlagen für die Würzezusammensetzung und somit für den Biertyp und die Bierqualität festgelegt werden. Der Maischprozeß beginnt mit der Vermischung einer bestimmten Schrotmenge, der Schüttung und einer bestimmten Brauwassermenge, dem sogenannten Hauptguß. Zur Steuerung des Prozesses stehen dem Brauer die Parameter Temperatur, Zeit, Konzentration der Maische und in einem geringen Umfang die Wasserstoffionenkonzentration zur Verfügung. Die am Maischende in der Maische vorliegende Extraktlösung heißt Vorderwürze.

Das Abläutern findet entweder im Läuterbottich oder - seltener - im Maischefilter statt. Unter Abläutern versteht man ganz allgemein die Trennung der löslichen Bestandteile der Maische, nämlich der Würze, von den unlöslichen Bestandteilen, den sogenannten Trebern. Die Trebern bestehen hauptsächlich aus den beim Schroten gewonnenen Spelzen und Eiweißstoffen, außerdem aus Stärke und mineralischen Bestandteilen. Für das Abläutern wird die gesamte Maische in den Läuterbottich gepumpt. Dieser hat, über dem eigentlichen Bottichboden, einen Siebboden, den sogenannten Senkboden. Auf diesem lagern sich die Treber ab, während die Würze durch die Siebschlitze - üblicherweise durch Abpumpen - aus dem Läuterbottich in die Würzepfanne gelangt. Die Trebern bilden hierbei für die abläuternde Würze eine Filterschicht. Grob kann der Läuterprozeß in zwei Abschnitte eingeteilt werden: das Abziehen, also dem Abpumpen der in der Maische vorliegenden Extraktlösung, der Vorderwürze, und das Auslaugen des noch extrakthaltigen Trebers mittels heißem Brauwasser, den sogenannten Nachgüssen. In jüngerer Vergangenheit sind auch andere Trenntechniken bekannt geworden.

Das Würzekochen findet in der Würzepfanne statt. Im Laufe des Kochprozesses wird Hopfen bzw. Hopfenpräparate zugegeben, aber auch die Zugabe von Zucker wird vereinzelt praktiziert. Die Hopfüng verleiht der Würze, und damit dem später durch die Gärung entstehendem Bier seinen typischen bitteren Geschmack. Zucker wird zugegeben um den Anteil des vergärbaren und/oder unvergärbaren Extraktes der Würzelösung zu erhöhen. Nach dem Würzekochen liegt die sogenannte Stammwürze vor. Kennzeichnend für die Stammwürze ist der Stammwürzegehalt. Der Stammwürzegehalt ist der Prozentanteil von in der Würze vor der Gärung gelösten Stoffen wie Malzzucker, Eiweißstoffen, Vitaminen, Spurenelementen und Aromasubstanzen. Die Stammwürzeangaben erfolgen in % Plato bzw. früher in ° Plato. Ungefähr ein Drittel dieses Stammwürzegehaltes wird üblicherweise durch die Hefe bei der Gärung in Alkohol, ausgedrückt in Gewichtsprozenten, umgewandelt. So ergibt z.B. eine zwölfprozentige Würze ein Bier mit einem Alkoholgehalt von etwa vier Gewichtsprozent. Es gibt jedoch auch Verfahren bei denen bewusst sehr hochprozentige, extrakthaltige Würzen im Sudhaus hergestellt werden, um diese dann nach deren Gärung, durch anschließendes Verdünnen, erst zu Bier mit einem bestimmten Alkoholgehalt einzustellen.

Mit dem Würzekochen werden folgende Ziele verfolgt: Verdampfung von Wasser zur Einstellung des Stammwürzegehaltes, Ausscheidung von hochmolekularem Eiweiß (die sogenannte Bruchbildung), Inaktivierung von Enzymen zur Fixierung der Würzezusammensetzung, Sterilisierung der Würze, Isomerisierung der Hopfenbitterstoffe, Bildung von Aromastoffen (die sogenannte Maillardreaktion) und Entfernung unerwünschter Aromastoffe. Diese Ziele werden allesamt durch die Hitzeeinwirkung bei Würzekochen erreicht.

Nach Beendigung des Würzekochens erfolgt die Heißtrubabscheidung üblicherweise in einem Whirlpool, bei der der zunächst in der Stammwürze enthaltene Heißtrub von der restlichen Stammwürze getrennt wird. Der Heißtrub besteht vorwiegend aus Eiweißstoffen, die durch die Hitzeeinwirkung beim Würzekochen koaguliert, also zusammengeballt wurden. Weiter enthält der Heißtrub Gerbstoffe und sonstige Schwebeteilchen. In einem Whirlpool wird, durch tangentiales Einpumpen, der Zentrifugeneffekt ausgenutzt. Dabei sammelt sich der Heißtrub in einer Kegelform auf der Bodenmitte des Whirlpools. Die derart separierte Stammwürze wird anschließend abgepumpt. Statt einem Whirlpool können auch andere Separatorsysteme eingesetzt werden.

Der letzte Teilprozeß der im Sudhausprozeß ist die Würzekühlung bei der die Stammwürze - üblicherweise durch ein Wärmetauschersystem - von nahezu Kochtemperatur auf die sogenannte Anstelltemperatur von z.B. 6°C abgekühlt. Die gekühlte Würze wird desweiteren gut belüftet. Die Kühlung ist vor der Gärung notwendig, um die Beibringung von Hefe zu ermöglichen, die nur bei niedrigeren Temperaturen überlebensfähig ist. Bis unmittelbar vor der anschliessenden Hefezugabe, dem sogenannten Anstellen, heißt die Würze in der Fachsprache Anstellwürze. Die Anstellwürze unmittelbar nach dem Hefezusatz wird dann schon als Bier oder auch Jungbier bezeichnet. Nun erfolgt die Hauptgärung der abgekühlten Stammwürze in einem Gärbehälter. Die der Würze zugesetzte Hefe ist nämlich in der Lage, die alkoholische Gärung in Gang zu setzen. Hierbei entstehen in biochemischen Vorgängen aus Zuckermolekülen Alkohol, CO₂ und bis zu 300 flüchtige und nichtflüchtige Nebenprodukte sowie Wärme, die mittels Kühlung abgeführt werden muß. Dabei ist zu Beginn der Gärung die Hefe zur Vermehrung auf eine ausreichende Sauerstoffversorgung, erzielt durch die Belüftung nach der Würzekühlung, angewiesen. Die Hauptgärung ist beendet, wenn der größte Teil des vergärbaren Extraktes vergoren ist. Danach kann eine weitere Abkühlung und eine Separation erfolgen. Im Anschluß daran erfolgt - üblicherweise in stark gekühlten Lagertanks - unter leicht erhöhtem Druck, den sogenannten Spundungsdruck, die Lagerung und Reifung des Bieres. Dabei wird der restliche vergärbare Extrakt weitestgehend vergoren. Sowohl durch den Spundungsdruck, als auch durch die niedrige Lagertemperatur z.B. 1°C wird der CO₂-Gehalt des Bieres festgelegt. Die Lagerung des Bieres erbringt ferner eine Vorklärung des Bieres und eine gewisse chemisch- physikalische Stabilität des Bieres.

Am Ende der Lagerung weist das Bier noch eine Trübung auf, die üblicherweise durch eine sogenannte Kieselgur-Filtration entfernt wird. Im Anschluss daran kann eine sogenannte PVPP-Stabilisation zur Haltbarmachung erfolgen. Ebenso kann eine zusätzliche Karbonisation des Bieres erfolgen. Danach gelangt das Bier in einen Drucktank. Von dort wird es unter Beibehaltung des Druck in Flaschen, Dosen, Fässer oder dergleichen abgefüllt. Vor dem Abfüllvorgang kann eine Pasteurisation zur Haltbarmachung des Bieres erfolgen.

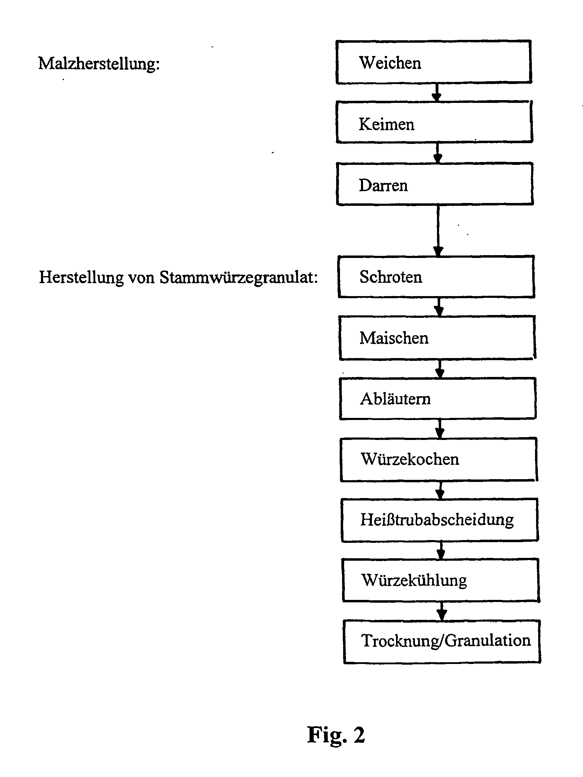

In Figur 2 ist der Prozeß der Herstellung von getrockneter Stammwürze, insbesondere Stammwürzegranulat, nach der vorliegenden Erfindung dargestellt. Die Herstellung der Stammwürze, die in flüssiger Form vorliegt, ist identisch mit der herkömmlichen Stammwürzeherstellung wie oben beschrieben. Insoweit wird daher auf die Ausführungen zu Figur 1 verwiesen. Die Würzekühlung ist nicht mehr notwendig, kann aber noch erfolgen. Danach erfolgt eine Trocknung der Stammwürze, so dass die getrocknete Stammwürze insbesondere in Form von Granulat, Trockenstoff oder Pulver vorliegt, die erheblich leichter transportiert werden kann als Stammwürze, die gewichtsmäßig überwiegend aus Wasser besteht.

Dabei eignet sich insbesondere der Einsatz der Wirbelschichttechnik, also Wirbelschichttrocknen, Wirbelschichtgranulieren, Wirbelschichtsprühgranulieren und/oder Wirbelbeschichten. Der besondere Vorteil der Wirbelschichttechnik ist einerseits ihre besondere Eignung für die Herstellung von Granulaten. Vor allem aber zeigte sich, dass mit der Wirbelschichttechnik bei geeignetem Temperaturverlauf bei der Trocknung, insbesondere bei einer Wirbelbetttemperatur von 70 bis 80°C, kein Qualitätsverlust oder nur ein geringfügiger Qualitätsverlust der Stammwürze zu verzeichnen ist.

Die Granulate können dabei mit einer oder mehreren weiteren Schichten überzogen werden, insbesondere also mit weiteren Aromastoffen. Vor allem aber können die in der getrockneten Stammwürze enthaltenen Aromastoffe eingekapselt werden, so dass diese bei einer Lagerung und bei einem eventuellen Transport nicht verflüchtigen. Ein weiterer Vorteil ergibt sich in der besseren Handhabung, insb. der besseren Lagerfähigkeit. Im Vergleich zu den bisherigen Grundstoffen ist das Förder- und Fließverhalten und die Staubfreiheit der Granulate verbessert. Das Hauptabfallprodukt der Würzeherstellung, die sog. Treber, fallen bei Einsatz der Erfindung nicht mehr dezentral an, welches entsprechende Synergie-Effekte mit sich bringt.

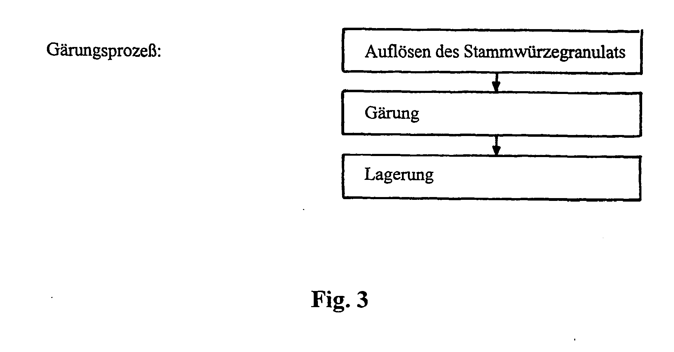

In Figur 3 ist der Prozeß der Herstellung von Bier, ausgehend von getrockneter Stammwürze, nach der vorliegenden Erfindung dargestellt. Die getrocknete Stammwürze wird zunächst in Wasser gelöst. Dabei können diskontinuierlich arbeitende Auflösungstechniken, insbesondere die batchweise arbeitende Lösetanktechnik, eingesetzt werden, aber auch kontinuierlich arbeitende Auflösungstechniken, insbesondere solche Auflösungstechniken, die im Gebiet der Herstellung von alkoholfreien Erfrischungsgetränken zum Auflösen von Kristallzucker eingesetzt werden.

Die so rückgewonnene Stammwürze kann einer thermischen Behandlung oder einer Behandlung mit ultraviolettem Licht unterzogen werden, µm die rückgewonnene Stammwürze vor der Zugabe der Hefe zu sterilisieren bzw. zu pasteurisieren.

Die rückgewonnene Stammwürze wird auf eine Temperatur gebracht, die sich für die Zugabe von Hefe eignet. Danach schließt sich der herkömmliche Gärprozeß an. Insoweit wird daher auf die obigen Ausführungen zu Figur 1 verwiesen.

Durch die vorliegende Erfindung wird eine kontinuierliche Bierherstellung ermöglicht. Die bisherigen Versuche, eine kontinuierliche Bierherstellung zu bewerkstelligen, scheiterten daran, dass der Sudhausprozess nur diskontinuierlich, also batchweise erfolgen kann. Dagegen ist eine kontinuierliche Gärung bereits nach dem Stand der Technik möglich, die aber aufgrund des diskontinuierlichen Sudhausprozesses nicht effektiv eingesetzt werden kann. Nach der vorliegenden Erfindung kann das Stammwürzegranulat bei einer Gäranlage insbesondere in Silos gelagert werden, so dass eine Anlage zur kontinuierlichen Gärung stetig mit rückgelöster Stammwürze gespeist werden kann. Dadurch wird eine effektive Auslastung einer kontinuierlichen Gäranlage möglich. Außerdem besteht bei dem diskontinuierlich ablaufenden Sudhausprozeß das Problem, dass der Extraktgehalt der flüssigen Stammwürze durch sogenannte Vor- und Nachläufe von Wasser uneinheitlich ist. Diese Vor- und Nachläufe von Wasser sind erforderlich, um die flüssige Stammwürze vollständig zu den Gärtanks zu befördern ohne Verlust an Stammwürze in den Leitungssystemen. Dieser wesentliche Nachteil besteht bei einer kontinuierlichen Rücklösung von Stammwürzegranulat nicht, so dass eine kontinuierliche Gäranlage mit rückgelöster Stammwürze mit einheitlichem Extraktgehalt beschickt werden kann, da Vor- und Nachläufe nicht erforderlich sind.

Weiter ist es nach der vorliegenden Erfindung möglich, das im Sudhausprozess notwendige Wasser bei der Trocknung der Stammwürze zurück zu gewinnen und - gegebenenfalls nach einer Aufbereitung - wieder in den Sudhausprozess einzuschleusen zur Zubereitung eines neuen Sudes. Dadurch wird nicht nur der Wasserbedarf bei der zentralen Stammwürzeherstellung reduziert, sondern es kann auch Energie in erheblichem Umfang gesenkt werden.

Um den Energieeinsatz zur Trocknung bzw. zur Granulation der flüssigen Stammwürze zu optimieren wird weiter nach der vorliegenden Erfindung vorgeschlagen, zwischen dem Whirlpool und der Wirbelschichtanlage einen Vakuumverdampfer einzusetzen. Vakuumverdampfer beruhen auf dem Prinzip, dass durch eine Herabsetzung des Druckes der Siedepunkt erheblich sinkt. So kann der Siedepunkt von Wasser bei einem Druck nahe 0 bar auf 35° bis 45° herabgesenkt werden. Es ist in der ersten Verdampferstufe lediglich eine Energie notwendig für den Betrieb einer Vakuumpumpe, durch die Wasserdampf entzogen wird. Dadurch kann der flüssigen Stammwürze durch nur geringen Einsatz an Energie bereits ein erheblicher Anteil an Wasser entzogen werden. Außerdem werden unerwünschte, leicht flüchtige Aromastoffe entzogen. In der weiteren bzw. den weiteren Verdampferstufen ist eine zusätzliche Zufuhr von Wärmeenergie notwendig, wobei darauf geachtet werden sollte, dass die Würzetemperatur unterhalb von etwa 80°C bleibt, um einen Qualitätsverlust der aufkonzentrierten Würze zu vermeiden.

Im übrigen kann ein Vakuumverdampfer auch schon beim Würzekochen eingesetzt werden, um einen Hauptzweck des Würzekochens, nämlich einen Entzug von Wasser von normalerweise etwa 8%, energiesparend zu erreichen. Nach der klassischen Verfahrensweise wird die Würze 60 bis 90 Minuten gekocht, um durch Wasserdampferzeugung einen definierten Extraktgehalt zu erhalten, und um leicht flüchtige unerwünschte Aromastoffe zu entfernen. Dieser Vorgang kann durch einen Vakuumverdamper erheblich verkürzt werden, so dass die zugeführte Energie zum Würzekochen entsprechend stark gesenkt werden kann.

## Patentansprüche

1. Verfahren zur Herstellung getrockneter Stammwürze aus flüssiger Stammwürze zur Verwendung für die Herstellung gebrauter Getränke **gekennzeichnet durch** Granulierung zur Trocknung der flüssigen Stammwürze **durch** die Wirbelschichttechnik, so dass getrocknete Stammwürze in Form von Granulat vorliegt.

2. Verfahren gemäß Anspruch 1, **dadurch gekennzeichnet, dass** das Stammwürzegranulat durch die Wirbelschichttechnik eingekapselt wird zur Erhaltung des Aromas.

3. Verfahren gemäß Anspruch 1 oder 2, **dadurch gekennzeichnet, dass** auf das Stammwürzegranulat zusätzlich Aromastoffe aufgebracht werden, insbesondere Zuckerverbindungen, Hopfenaromen und/oder Hefe.

4. Verfahren gemäß einem der vorhergehenden Ansprüche, **dadurch gekennzeichnet, dass** vor der Trocknung eine Vakuumverdampfung zur Entziehung von Wasser erfolgt.

5. Verfahren gemäß einem der vorhergehenden Ansprüche, **dadurch gekennzeichnet, dass** beim Würzekochen eine Vakuumverdampfung stattfindet, insbesondere am Ende des Würzekochens.

6. Verfahren gemäß einem der vorhergehenden Ansprüche, wobei die Herstellung von flüssiger Stammwürze erfolgt durch die folgenden Schritte:
Brauwasseraufbereitung zur Bereitstellung von Brauwasser für den Sudhausprozess,
Schroten zur Zerkleinerung von Malz,
Maischen zum Lösen der Malzinhaltsstoffe, insbesondere der Stärke und der Eiweißstoffe, im Brauwasser und den Abbau hochmolekularer organischer Substanzen in eine wasserlösliche Form durch die malzeigenen Enzyme, wodurch eine Maische erzeugt wird,
Abläutern zum Trennen der löslichen Bestandteile der Maische von den unlöslichen Bestandteilen,
Würzekochen zur Verdampfung von Wasser zur Einstellung des Stammwürzegehaltes, Ausscheidung von hochmolekularem Eiweiß, Inaktivierung von Enzymen zur Fixierung der Würzezusammensetzung, Sterilisierung der Würze, Isomerisierung der Hopfenbitterstoffe, Bildung von Aromastoffen und zur Entfernung unerwünschter Aromastoffe, und
Heißtrubabscheiden zur Trennung von in der Stammwürze enthaltenem Heißtrub.

7. Verfahren gemäß einem der vorhergehenden Ansprüche, **dadurch gekennzeichnet, dass** als Ausgangsprodukt für die Stammwürze- bzw. Malzherstellung eine oder mehrere der folgenden Getreidearten bzw. Grundstoffe verwendet wird: Gerste, Weizen, Roggen, Dinkel, Emmer, Mais, Reis, Sorghum, Zucker und/oder sonstige vermälzte oder unvermälzte Getreidearten.

8. Verfahren gemäß einem der vorhergehenden Ansprüche, **dadurch gekennzeichnet, dass** für die Herstellung des Stammwürzegranulats hochkonzentrierte Bierwürze, Zucker, Getreidemehl, Hopfen, Hopfenpräparate und/oder Aromastoffe verwendet werden.

9. Verfahren gemäß einem der vorhergehenden Ansprüche, **dadurch gekennzeichnet, dass** die getrocknete Stammwürze einen Wassergehalt von höchstens 5, 2 oder 1 Gewichtsprozent aufweist.

10. Verfahren gemäß einem der vorhergehenden Ansprüche, **dadurch gekennzeichnet, dass** das bei der Trocknung bzw. Granulierung rückgewonnene Wasser in den Sudhausprozess wieder eingeschleust wird zur Bereitung eines neuen Sudes.

11. Vorrichtung oder Anlage zur Herstellung von getrockneter Stammwürze zur Verwendung für die Herstellung von gebrauten Getränken, insbesondere Bier, umfassend:
eine Würzepfanne zum Würzekochen von Stammwürze,
einen Whirlpool zum Heißtrubabscheiden für die Trennung von in der Stammwürze enthaltenem Heißtrub, und
eine Vorrichtung oder Anlage zur Trocknung der Stammwürze,
**dadurch gekennzeichnet, dass**
die Vorrichtung oder Anlage zur Trocknung der Stammwürze eine Wirbelschichtanlage ist, so dass getrocknete Stammwürze in Form von Granulat hergestellt wird, wobei das Stammwürzegranulat eingekapselt werden kann zur Erhaltung des Aromas.

12. Vorrichtung oder Anlage gemäß Anspruch 11, wobei die Vorrichtung oder Anlage weiter umfasst:
eine Brauwasseraufbereitungsanlage zur Bereitstellung von Brauwasser für den Sudhausprozess,
eine Schrotmühle zur Zerkleinerung von Malz,
einen Maischbottich oder eine Maischpfanne zum Lösen der Malzinhaltsstoffe, insbesondere der Stärke und der Eiweißstoffe, im Brauwasser und den Abbau hochmolekularer organischer Substanzen in eine wasserlösliche Form durch die malzeigenen Enzyme, wodurch eine Maische erzeugt wird, und
einen Läuterbottich zum Trennen der löslichen Bestandteile der Maische von den unlöslichen Bestandteilen.

13. Vorrichtung oder Anlage gemäß Anspruch 12, **gekennzeichnet durch** einen einen Vakuumverdampfer, der an der Würzepfanne angeordnet ist zur teilweisen Vakuumverdampfung von gekochter Stammwürze.

14. Vorrichtung oder Anlage gemäß einem der Ansprüche 12 oder 13, **gekennzeichnet durch** eine Anlage zur Wiedereinschleusung des bei der Trocknung bzw. Granulierung rückgewonnenen Wassers in den Sudhausprozess, insbesondere mit einer Anlage zur Wiederaufbereitung.

15. Granulat, **dadurch gekennzeichnet, dass** es nach einem Verfahren gemäß einem der Ansprüche 1 bis 10 hergestellt worden ist.

16. Verfahren zur Herstellung von gebrauten Getränken, insbesondere Bier, **dadurch gekennzeichnet, dass** Granulat gemäß Anspruch 15 in Brauwasser aufgelöst wird, um flüssige Stammwürze herzustellen.

17. Verfahren gemäß Anspruch 16, **dadurch gekennzeichnet, dass** die wieder hergestellte Stammwürze vergoren wird, insbesondere mittels einer kontinuierlich arbeitenden Gäranlage.

## Claims

1. Method for manufacturing dried original wort from liquid original wort for use for the manufacture of brewed beverages, **characterised by** granulation to dry the liquid original wort by the fluid bed technique so that dried original wort is present in the form of granulate.

2. Method according to claim 1, **characterised in that** the original wort granulate is encapsulated by the fluid bed technique to preserve the aroma.

3. Method according to claim 1 or 2, **characterised in that** in addition aromatic substances, in particular sugar compounds, hop aromas and/or yeast, are applied to the original wort granulate.

4. Method according to one of the preceding claims, **characterised in that** before the drying vacuum evaporation is carried out to extract water.

5. Method according to one of the preceding claims, **characterised in that** when the wort is boiled vacuum evaporation takes place, in particular at the end of the boiling of the wort.

6. Method according to one of the preceding claims, in which the manufacture of liquid original wort takes place through the following steps:
preparation of mashing liquor to provide mashing liquor for the brewing house process,
rough-grinding to comminute malt,
mashing to dissolve the substances contained in the malt, in particular the starch and albumin, in the mashing liquor and break down high molecular organic substances into a water-soluble form through the enzymes in the malt, through which a mash is produced,
running off to separate the soluble components of the mash from the insoluble components,
boiling the wort to evaporate water to set the original wort content, separate high molecular albumin, deactivate enzymes to fix the wort composition, sterilise the wort, isomerise the hop bitters, form aromatic substances and
remove undesired aromatic substances, and
hot filtering to separate hot sludge contained in the original wort.

7. Method according to one of the preceding claims, **characterised in that** one or more of the following types of grain or basic substances is used as starting product for manufacturing the original wort or malt: barley, wheat, rye, spelt, emmer, maize, rice, sorghum, sugar and/or other malted or unmalted types of grain.

8. Method according to one of the preceding claims, **characterised in that** highly concentrated beer wort, sugar, grain flour, hops, hop preparations and/or aromatic substances are used to manufacture the original wort granulate.

9. Method according to one of the preceding claims, **characterised in that** the dried original wort has a water content of at most 5, 2 or 1 wt%.

10. Method according to one of the preceding claims, **characterised in that** the water recovered during the drying or granulation is reintroduced into the brewing house process to prepare a new brew.

11. Device or installation for manufacturing dried original wort for use for manufacturing brewed beverages, in particular beer, comprising:
a wort copper for boiling the original wort,
a whirlpool for hot filtering to separate hot sludge contained in the original wort, and
a device or installation for drying the original wort,
**characterised in that** the device or installation for drying the original wort is a fluid bed installation so
that dried original wort is manufactured in the form of granulate, and the original wort granulate can be encapsulated to preserve the aroma.

12. Device or installation according to claim 11, in which the device or installation also comprises:
a mashing liquor preparation installation to provide mashing liquor for the brewing house process,
a rough-grinding mill to comminute malt,
a mash tun or a mash copper to dissolve the substances contained in the malt, in particular the starch and
albumin, in the mashing liquor and break down high molecular organic substances into a water soluble form through the enzymes in the malt itself, through which a mash is produced, and
a running-off tun to separate the soluble ingredients of the mash from the insoluble ingredients.

13. Device or installation according to claim 12, **characterised by** a vacuum evaporator which is arranged on the wort copper for partial vacuum evaporation of boiled original wort.

14. Device or installation according to one of claims 12 or 13, **characterised by** an installation for reintroducing the water recovered during the drying or granulation into the brewing house process, in particular with an installation for reprocessing.

15. Granulate, **characterised in that** it has been manufactured by a method according to one of claims 1 to 10.

16. Method for manufacturing brewed beverages, in particular beer, **characterised in that** granulate according to claim 15 is dissolved in mashing liquor in order to manufacture liquid original wort.

17. Method according to claim 16, **characterised in that** the remanufactured original wort is fermented, in particular by means of a continuously operating fermenting installation.

## Revendications

1. Procédé de fabrication de moût original ou primitif séché à partir de moût original ou primitif liquide à des fins d'utilisation pour la fabrication de boissons brassées, **caractérisé par** une granulation pour le séchage du moût original ou primitif liquide par la technique en lit fluidisé, si bien que le moût original ou primitif séché se présente sous la forme de granulés.

2. Procédé selon la revendication 1, **caractérisé en ce que** les granulés de moût original sont enrobés par la technique du lit fluidisé pour conserver l'arôme.

3. Procédé selon la revendication 1 ou 2, **caractérisé en ce que** sur les granulés de moût original sont en outre appliquées des substances d'arôme, en particulier des composés de sucre, des arômes de houblon et/ou de la levure.

4. Procédé selon l'une des revendications précédentes, **caractérisé en ce qu'**avant le séchage se produit une évaporation sous vide pour extraire l'eau.

5. Procédé selon l'une des revendications précédentes, **caractérisé en ce que** lors de la cuisson du moût se produit une évaporation sous vide, en particulier à la fin de la cuisson du moût.

6. Procédé selon l'une des revendications précédentes, dans lequel la fabrication du moût original liquide est réalisée par les étapes suivantes :
préparation de l'eau de brassage pour mettre à disposition de l'eau de brassage pour le processus en salle de brassage,
égurgeage pour broyer le malt,
trempage pour dissoudre les constituants du malt, en particulier l'amidon et les protéines, dans l'eau de brassage et dégrader les substances organiques de masse moléculaire élevée en une forme hydrosoluble par les enzymes propres au malt, suite à quoi on génère un moût,
filtration pour séparer les composants solubles du moût des composants insolubles,
cuisson du moût pour évaporer l'eau afin de régler la teneur en moût original, séparation ou éliminer des protéines de masse moléculaire élevée, inactivation des enzymes afin de fixer la composition du moût, stérilisation du moût, isomérisation des substances amères du houblon, formation de substances d'arôme et
élimination des substances d'arôme non souhaitées, et
dépôt à chaud des lies pour séparer les lies chaudes contenues dans le moût original.

7. Procédé selon l'une des revendications précédentes, **caractérisé en ce que** l'on utilise en tant que produit de départ pour la fabrication du moût original ou du malt une ou plusieurs des céréales ou matières premières suivantes : orge, blé, seigle, épeautre, amidonnier, maïs, riz, sorgho, sucre et/ou autres types de céréales maltées ou non maltées.

8. Procédé selon l'une des revendications précédentes, **caractérisé en ce que**, pour la fabrication des granulés de moût original, on utilise du moût de bière très concentré, du sucre, de la farine de céréales, du houblon, des préparations à base de houblon et/ou des substances d'arômes.

9. Procédé selon l'une des revendications précédentes, **caractérisé en ce que** le moût original séché présente une teneur en eau au plus égale à 5, 2 ou 1 pour-cent en masse.

10. Procédé selon l'une des revendications précédentes, **caractérisé en ce que** l'eau recueillie lors du séchage ou de la granulation est ré-introduite dans le processus en salle de brassage pour préparer un nouveau brassin.

11. Dispositif ou installation de fabrication de moût original séché à utiliser pour la fabrication de boissons brassées, en particulier de bière, comprenant :
une chaudière à moût pour la cuisson du moût original,
un bac à centrifugation pour le dépôt à chaud des lies afin de séparer les lies chaudes contenues dans le moût original, et
un dispositif ou une installation de séchage du moût original,
**caractérisé**(e) en ce que
le dispositif ou l'installation de séchage du moût original est une installation en lit fluidisé, si bien que le moût original séché est fabriqué sous la forme de granulat ou granulés, le granulat ou les granulés de moût original pouvant être enrobés pour conserver l'arôme.

12. Dispositif ou installation selon la revendication 11, dans lequel le dispositif ou l'installation comprend en outre :
une installation de préparation d'eau de brassage pour mettre à disposition de l'eau de brassage pour le processus en salle de brassage,
un moulin concasseur de grains pour concasser ou broyer le malt,
une cuve-matière ou une chaudière de cuisson pour dissoudre les constituants du malt, en particulier l'amidon et les protéines, dans l'eau de brassage et pour dégrader les substances organiques de masse moléculaire élevée en une forme hydrosoluble par les enzymes propres au malt, un moût étant ainsi généré, et
une cuve de filtrage pour séparer les composants solubles du moût des composants insolubles.

13. Dispositif ou installation selon la revendication 12, **caractérisé**(e) par un évaporateur à vide qui est disposé au niveau de la chaudière à moût pour une évaporation partielle à vide du moût original cuit.

14. Dispositif ou installation selon l'une des revendications 12 ou 13,
**caractérisé**(e) par une installation de ré-introduction dans le processus en salle de brassage de l'eau recueillie lors du séchage ou de la granulation, en particulier avec une installation de retraitement.

15. Granulat, **caractérisé en ce qu'**il a été fabriqué selon un procédé selon l'une des revendications 1 à 10.

16. Procédé de fabrication de boissons brassées, en particulier de bière, **caractérisé en ce que** l'on dissout dans de l'eau de brassage le granulat selon la revendication 15 pour fabriquer un moût original liquide.

17. Procédé selon la revendication 16, **caractérisé en ce que** le moût original re-fabriqué est fermenté, en particulier au moyen d'une installation de fermentation travaillant en continu.
